(19) Europäisches Patentamt
European Patent Office
Office européen des brevets

(11) EP 4 692 407 A1

(12) **EUROPEAN PATENT APPLICATION**
published in accordance with Art. 153(4) EPC

(43) Date of publication:
**11.02.2026 Bulletin 2026/07**

(21) Application number: **24813830.7**

(22) Date of filing: **19.03.2024**

(51) International Patent Classification (IPC):
*C22C 38/50* (2006.01)     *C22C 38/28* (2006.01)
*B32B 15/01* (2006.01)     *B21B 1/22* (2006.01)

(52) Cooperative Patent Classification (CPC):
**B21B 1/22; B21B 1/38; B21B 37/58; B21B 37/74;
B21B 47/00; B32B 15/01; B32B 15/18;
B32B 37/06; B32B 37/10; B32B 38/00; C21D 8/02;
C22C 38/02; C22C 38/04; C22C 38/06;
C22C 38/28;** (Cont.)

(86) International application number:
**PCT/CN2024/082492**

(87) International publication number:
**WO 2024/244624 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.05.2023 CN 202310604604**

(71) Applicant: BAOSHAN IRON & STEEL CO., LTD.
**Shanghai 201900 (CN)**

(72) Inventors:
• **XING, Zhao**
  **Shanghai 201900 (CN)**

• **JIAO, Sihai**
  **Shanghai 201900 (CN)**
• **YAN, Bo**
  **Shanghai 201900 (CN)**
• **HAO, Yingmin**
  **Shanghai 201900 (CN)**
• **LIANG, Xiaojun**
  **Shanghai 201900 (CN)**
• **KONG, Wei**
  **Shanghai 201900 (CN)**

(74) Representative: **Maiwald GmbH**
**Elisenhof**
**Elisenstraße 3**
**80335 München (DE)**

(54) **SEA WAVE SPLASH ZONE CORROSION-RESISTANT 460 MPA GRADE HOT-ROLLED STRIP FOR BUILDING STRUCTURE**

(57)     The present disclosure relates to a hot-rolled strip steel for building structure and manufacturing method therefor. The hot-rolled strip steel comprises a base layer, a corrosion resistant layer, and an interfacial transition layer between the base layer and the corrosion resistant layer. The base layer comprises the following chemical elements in percentage by mass: C: 0.03-0.13%, Si: 0.15-0.35%, Mn: 1.00-1.50%, P: 0.0005-0.003%, S: 0.0005-0.01%, Cr: 0.10-0.65%, Ni: 0.2-1.0%, Cu: 0.10-0.25%, Al: 0.020-0.050%, Ti: 0.0090-0.0160%, Nb: 0.060-0.100%, N: 0.0005-0.0050%, V: 0.08-0.25%, the balance being Fe and other inevitable impurities. The corrosion resistant layer is made of industrial pure titanium. The base layer of the hot-rolled strip steel for building structure according to the present disclosure has a yield strength of ≥ 460 MPa, a tensile strength of ≥ 580 MPa, a yield-to-tensile ratio of ≤ 0.81, and an impact energy at -40 °C of ≥ 190 J; the corrosion resistant layer has a corrosion rate against sea wave splash of ≤ 0.006 mm/year; and the interfacial transition layer has a thickness of ≤ 8 μm, and an interfacial shear strength of ≥ 268 MPa.

FIG. 1

EP 4 692 407 A1

**(Cont. next page)**

(52) Cooperative Patent Classification (CPC): (Cont.)
**C22C 38/42; C22C 38/46; C22C 38/48;
C22C 38/50; C22F 1/18**

**Description**

**TECHNICAL FIELD**

The present disclosure relates to a steel for building structure and a manufacturing method therefor, and in particular to a hot-rolled strip steel for building structure resistant to corrosion in sea wave splash zone and a manufacturing method therefor.

**BACKGROUND**

The marine environment is an extremely harsh and complex corrosive environment. Seawater is a strong electrolyte solution with a high concentration of chloride ions. As the main structure of marine engineering facilities, steel facilities are extremely susceptible to react electrochemically with the surrounding media and are severely corroded, greatly reducing the service life of these facilities. Especially in the sea wave splash zone of the facility, the harshest marine environmental corrosion area, various facilities are affected by a series of external factors such as wet-dry cycling, ocean spray, sunlight, corrosive components in the atmosphere and oxygen, resulting in particularly severe corrosion of materials.

Investigations show that the sea wave splash zones of steel piles in facilities such as harbor terminals and offshore oil platforms undergo severe corrosion, which is generally 3 to 10 times that of the fully immersed seawater zone. Once severe local corrosion damage occurs to the steel piles, the bearing capacity of the entire facility will be significantly reduced, the service life will be shortened, production safety will be affected, and even the facility will be scrapped prematurely.

In the sea wave splash zone, since it is in a wet-dry cycling zone and has ample oxygen supply, the resulting corrosion products offer no protective effect; and due to the splashing of seawater, seawater spray directly hits the metal surface, causing severe corrosion. Corrosion tests and investigation results show that, under normal circumstances, the average corrosion rate of an ordinary carbon steel, a low alloy steel, etc. in the marine atmosphere is approximately 0.03 to 0.08 mm/year, while in the sea wave splash zone, it is 0.3 to 0.5 mm/year. In the sea wave splash zone, steel piles are prone to severe corrosion damage, which greatly reduces the bearing capacity of the entire steel structure, thereby affecting safe production, shortening the service life, and causing premature scrapping.

Based on the above operating conditions, industrial pure titanium is selected as the corrosion-resistant layer. Titanium is highly chemically active and readily reacts with oxygen in air to form oxides. The oxides on the titanium metal surface are dense, stable, and have strong "self-healing" ability. The "self-healing" ability of titanium oxide mainly indicates that when the titanium oxide film somewhere on the surface of the titanium material is damaged, a new layer of titanium oxide film can be quickly generated to prevent the corrosive medium from further contacting the titanium.

For a steel used for marine building structure, in addition to meeting the requirements of corrosion resistance, it is also necessary to exhibit good mechanical properties, wherein the yield-to-tensile ratio and impact toughness at low temperature are increasingly becoming the key indicators of a steel for building. The yield-to-tensile ratio is the ratio of yield strength to tensile strength of steel, and its magnitude reflects the ability of the steel to avoid strain concentration during plastic deformation. The lower the yield-to-tensile ratio, the more the plastic deformation of the steel can be evenly distributed over a wider area. Under the action of seismic force, the plastic deformation of a steel structure system made of steel with low yield-to-tensile ratio can be evenly distributed over a wider area; while for a material with high strength yield-to-tensile ratio, strain concentration may occur, reducing the overall plastic deformation ability of the steel, thereby leading to brittle failure of the structure, causing structural instability and sudden collapse.

Steel will undergo a brittle transition in a low-temperature environment, changing the fracture mode of the steel from ductile fracture to brittle fracture. The engineering significance thereof lies in that when the steel operates above this temperature, the structure will not suffer from brittle fracture. Therefore, for a steel used for structure, it is usually necessary to make corresponding requirements on the low-temperature impact property of the steel according to the service environment of the material. The ocean temperatures vary significantly at different latitudes. For example, near China's Bohai Bay, the seaside temperature can reach -20 °C or less in winter. This requires building materials to possess good impact property at -40 °C to avoid brittle fracture.

However, when improving the plasticity and toughness of a steel, if the increase in tensile strength is small, the yield-to-tensile ratio will increase significantly, making it difficult to maintain a low yield-to-tensile ratio.

Chinese Patent Application CN201210260231.7 discloses a method for manufacturing a titanium-steel-titanium double-sided clad plate, comprising: stacking four titanium plates and three steel plates in a certain order within a closed frame welded with two outermost steel plates, adding an separating agent made by mixing 1 part by weight of active $\alpha$-$Al_2O_3$ and 1.5 parts by weight of 4% polyvinyl alcohol aqueous solution between the titanium plates, and using a nickel-based alloy as a transition layer between the titanium plate and the steel plate. It is heated to 500-630 °C and vacuumed for 1-2 hours, with a vacuum degree of 20-200 Pa. It is characterized in that after slab assembly, welding is performed before vacuuming, and ordinary arc welding and submerged suffice for the welding process. Compared to welding under vacuum conditions, the welding requirements are lower, the cost is lower, and there is no need to separately build a vacuum chamber. Subsequently, the clad slab is subjected to conventional heating furnace and rolled at a rolling temperature of 700-900 °C to achieve cladding. By sealing and welding the outermost steel plates and vacuuming, the carbon in the gas can be separated, while a nickel-based alloy isolation layer is applied to prevent the formation of TiC at the interface, resulting in a titanium-steel clad plate with a shear strength of 230-260 MPa and an interfacial bonding rate of 99.6-100%.

Chinese Patent Application CN201710769999.X discloses a method for manufacturing titanium-steel clad plate. The method comprises: selecting surfaces to be in contact with one another in a titanium-steel clad slab, applying a high-temperature-resistant, anti-carburization and anti-nitridation isolation coating onto the surfaces of titanium to be in contact, and drying at room temperature. After drying is completed, the titanium slabs are aligned and stacked in pairs with the steel slab placed therebetween to complete the assembly and obtain a clad slab. The thickness of the titanium plate used is greater than 2 mm, and the thickness of the steel plate is greater than 5 mm. The periphery of the clad slab is then seal-welded while leaving an unwelded portion of a specific size. The slab is vacuumed to $10^{-2}$-$10^{-3}$ Pa before welding. The slab is heated to 500-700 °C and rolled, wherein a first pass reduction rate is more than 25%, a last pass reduction rate is not more than 15%, a total reduction rate is 60-70%, and a rolling speed is 0.1-1.0 mm/s. The patent application achieves protection against diffusion of impurity elements and oxidation at high temperatures by employing a coating with high-temperature anti-permeation properties, and blocks the diffusion of elements such as carbon and nitrogen. In the Examples, Q235 steel and TA1 titanium were bonded, and the resulting clad plates exhibited shear strengths of 176 MPa, 181 MPa and 182 MPa.

The above two patent applications primarily avoid the formation of brittle Ti compounds by applying an additional nickel-based alloy isolation layer between titanium and carbon steel.

Chinese Patent Application CN201811327623.4 discloses a titanium-steel-titanium clad plate and manufacturing method therefor. The method comprises sandwiching a carbon steel plate between two titanium plates of the same size, followed by warm clad rolling using an irreversible high-rolling-force warm rolling mill to integrally bond the three layers. After rolling, the rolled clad plate is subjected to heat treatment, including primary annealing at 500-600 °C for 20-60 minutes and recrystallization annealing at 680-700 °C for 30-120 minutes. Finally, the product is obtained by straightening, leveling, shearing and shaping. The patent application primarily describes a method for manufacturing a clad titanium steel plate without using hot-rolling cladding. However, due to the use of irreversible rolling mills, only single pass rolling production can be carried out, and heat treatment is also required. In the Examples, the main focus is on the production method of steel strip, and the performance of the product after cladding is not mentioned.

Chinese Patent Application CN201510543767.3 discloses a method for manufacturing titanium-steel clad plate. The bonding strength of the titanium-steel clad plate obtained by this method is high. The patent application involves: fixing a titanium plate between two ordinary carbon steel plates or slabs, welding the periphery of the assembly in a vacuum environment, heating the clad slab to 850-900 °C for 120-360 minutes, controlling the rolling process with a starting rolling temperature of 800 °C or more and a finishing rolling temperature of 700 °C or less, and controlling the deformation of each pass to 20-30% and a total deformation during rolling to ≥90%. This high-reduction rolling process serves to fracture brittle intermetallic compounds formed at the interface, thereby mitigating their effects on the bonding interface. After rolling, the resulting titanium-steel clad plate achieves a bonding strength greater than 240 MPa. However, the patent application requires a high pass reduction rate and total deformation, which can easily lead to edge weld cracking and damage the vacuum degree during the rolling process, making it unsuitable for interfacial bonding.

Chinese Patent Application CN201610994234.1 discloses a method for manufacturing titanium-steel clad plate, involving an annealing technique for the method for manufacturing titanium steel plate. Firstly, the titanium plate and steel plate are assembled to form a symmetrical multi-layer clad slab with a structure of steel plate-titanium plate-separating agent-titanium plate-steel plate. The cladding is carried out by roll cladding or explosive cladding. The slab after cladding is annealed and pickled using a continuous annealing and pickling line. It is first heated to 500-750 °C to recrystallize the core titanium plate, and then heated to 950-1050 °C to recrystallize the base steel plate. The purpose of the patent application is to simultaneously achieve the properties of cladding materials and substrate through two-stage heat treatment. However, two-stage heat treatment can lead to excessive diffusion of elements titanium, iron and carbon, resulting in intermetallic compounds of iron and titanium and brittle materials such as titanium carbide, which degrade the interfacial shear strength.

Chinese Patent Application CN201710996925.X discloses a thin-clad double-sided titanium-steel clad plate and manufacturing method therefor. The method achieves good cladding between the titanium and steel by using thick slab assembly and high-reduction rolling technology. The patent application is directed to a double-sided titanium clad plate composed of a titanium cladding layer, a base layer and a titanium cladding layer. The titanium cladding layer is made of TA2, wherein the titanium cladding layer has a thickness of 0.2-1 mm. The slab assembly is stacked centrally in the following top-to-bottom sequence: cover plate, titanium cladding material, carbon steel substrate, titanium cladding material, and cover plate. After extracting vacuum in a vacuum chamber, the peripheral seams of the assembly are seal-welded by vacuum electron beam, with a vacuum degree of $1.0 \times 10^{-2}$-$4.5 \times 10^{-2}$ Pa. The seal-welded clad slab is heated to 900-920 °C and held for a time period, which is calculated as 1 min/mm × total thickness of clad slab. The starting rolling temperature is 880-900 °C, and the finishing rolling temperature is 800 °C or more, followed by air cooling to room temperature. The single pass reduction rate is ≥ 15%, the reduction rate for the first three pass is ≥ 20%, and the total reduction rate is ≥ 80%. The clad plate obtained after rolling is subjected to trimming, plate splitting, and surface grinding to obtain a double-sided titanium-steel clad plate. In the patent application, through surface cleaning treatment of the clad slab, the covering and air-isolating effect of the cover plates, controlled rolling temperature and the application of high reduction rates, the iron-titanium and titanium-carbon compounds formed at the clad interface are fractured, refined, and dispersed within the clad interface. This improves the distribution state of the compounds, further ensuring the bonding quality and performance stability, resulting in a shear strength of 241 MPa.

Chinese Patent Application CN201710983322.6 discloses a thin-clad titanium-steel clad plate and manufacturing method therefor, which adopts a double-layer structure of cladding titanium and carbon steel. The slab assembly approach and heating process are similar to those in Chinese Patent Application CN201710996925.X, with a starting rolling temperature of 880-900 °C, a single pass reduction rate of 25-30%, and a total reduction rate of ≥ 85%. While controlling the single pass reduction rate and total reduction rate, the thickness of the titanium-steel clad plate is limited to 3 to 16 mm. The finishing rolling temperature is 800 °C or more, followed by air cooling to room temperature. The titanium-steel clad plate is obtained through surface treatment, with the titanium cladding layer having a thickness of ≤ 1 mm. The patent application enhances the bonding quality by employing a symmetric slab assembly method and encapsulating the titanium within the carbon steel plates through seal welding. After rolling, the steel plate achieves a shear strength of 238 MPa or more, and the clad interfacial bonding rate is 100%. The carbon steel layer meets the requirements of the Chinese national standard for Q345 grade carbon steel.

However, the aforementioned two patent applications do not specify the detailed design of the cladding and base layers, and only describe the tensile properties and shear strength. The required pass reduction rate and total reduction rate for the cladding layer are relatively high, and no control is exercised over performance indicators such as corrosion resistance of the material, low-temperature impact performance of the base layer material and yield-to-tensile ratio, which do not meet the requirements for steel used in building structures.

In summary, the aforementioned patent applications primarily describe methods for manufacturing clad steel plates, and the specific examples mainly provide a brief description of properties such as interfacial shear strength and tensile property. A steel for steel structure in the sea wave splash zone should not only be resistant to corrosion in the sea wave splash zone, but also ensure that it meet the necessary requirements for properties of the steel for structure, as well as the low yield-to-tensile ratio and corresponding low-temperature impact property as mentioned above to ensure structural safety. However, the aforementioned patent applications fail to provide the composition and process designs related to the corrosion rate of the corrosion-resistant layer, yield-to-tensile ratio, low-temperature impact, etc., and cannot ensure that the use requirements of a high-corrosion-resistant steel plate for steel structures in the sea wave splash zone environment can be met.

## SUMMARY

In view of the above-mentioned deficiencies in the prior art, one of the objectives of the present disclosure is to provide a hot-rolled strip steel for building steel structures and a manufacturing method therefor. The hot-rolled strip steel for building steel structures according to the present disclosure can meet the corresponding strength level requirements for the mechanical properties of the base layer (carbon steel) without reducing the corrosion resistance *per se* of the corrosion-resistant layer, and the base layer exhibits excellent yield-to-tensile ratio and low-temperature impact toughness.

Therefore, in one aspect, the present disclosure provides a hot-rolled strip steel for building structure, wherein the hot-rolled strip steel comprises a base layer, a corrosion-resistant layer, and an interfacial transition layer between the base layer and the corrosion-resistant layer;

The base layer comprises, in addition to Fe and other inevitable impurities, the following chemical elements in percentage by mass: C: 0.03-0.13%, Si: 0.15-0.35%, Mn: 1.00-1.50%, P: 0.0005-0.003%, S: 0.0005-0.01%, Cr: 0.10-0.65%, Ni: 0.2-1.0%, Cu: 0.10-0.25%, Al: 0.020-0.050%, Ti: 0.0090-0.0160%, Nb: 0.060-0.100%, N: 0.0005-0.0050%, V: 0.08-0.25%.

The corrosion-resistant layer is made of industrial pure titanium, preferably TA1, TA2, TA3, or TA4.

Preferably, the base layer has a chemical composition further satisfying the following relationships:

$$0.32\% \leq Cu+Ni \leq 1.15\%;$$

and

$$2(C+N) \leq Ti+Nb+Cr+V \leq 0.90\%.$$

Preferably, the base layer comprises the following chemical elements in percentage by mass: C: 0.03-0.13%, Si: 0.15-0.35%, Mn: 1.00-1.50%, P: 0.0005-0.003%, S: 0.0005-0.01%, Cr: 0.10-0.65%, Ni: 0.2-1.0%, Cu: 0.10-0.25%, Al: 0.020-0.050%, Ti: 0.0090-0.0160%, Nb: 0.060-0.100%, N: 0.0005-0.0050%, V: 0.08-0.25%, and the balance being Fe and other inevitable impurities.

Preferably, the base layer has a microstructure of ferrite + bainite + martensite, wherein the content of bainite + martensite is 5% -15%, and the ferrite has an average grain size of ≥ grade 8.5.

Preferably, the base layer has a yield strength of ≥ 460 MPa, a tensile strength of ≥ 580 MPa, a yield-to-tensile ratio of ≤ 0.81, preferably ≤ 0.75, and an impact energy at -40 °C of ≥ 190 J.

Preferably, the corrosion-resistant layer has a microstructure of single, equiaxed α-Ti.

Preferably, the corrosion-resistant layer has a corrosion rate against sea wave splash of ≤0.006 mm/year.

Preferably, the interfacial transition layer has a thickness of ≤8 μm, has an average grain size of 15-40 μm, comprises (Ti, Nb)C precipitate particles of <120 nm, and has an interfacial shear strength of ≥268 MPa.

The interfacial transition layer of the hot-rolled strip steel according to the present disclosure exhibits 100% metallurgical bonding and highly coherent atoms, and the interfacial transition layer has a microstructure of fine grains (with an average grain size is 15-40 μm).

Preferably, the hot-rolled strip steel for building structure has a thickness of 1-16 mm. The base layer of the hot-rolled strip steel for building structure according to the present disclosure has a yield strength of ≥ 460 MPa, a tensile strength of ≥580 MPa, a yield-to-tensile ratio of ≤ 0.81 (preferably ≤0.75), an impact energy at -40 °C of ≥190 J; the corrosion-resistant layer has a corrosion rate against sea wave splash of ≤0.006 mm/year; and the interfacial transition layer has a thickness of ≤8 μm, and an interfacial shear strength of ≥268 MPa. The hot-rolled strip steel according to the present disclosure can meet the corrosion resistance requirements for use in sea wave splash zone environment, and has good mechanical properties and high economy, which is suitable for use in steel structures such as steel piles for facilities such as harbor terminals and offshore oil platforms.

The present disclosure adopts a low-carbon microalloying composition design, achieving an excellent bonding of titanium and carbon steel without the addition of a metal isolation layer, and effectively controlling the thickness of the interfacial transition layer, so that the mechanical properties of the base layer (carbon steel) can meet the requirement of the corresponding strength grade without reducing the corrosion resistance *per se* of the corrosion-resistant layer.

In another aspect, the present disclosure provides a method for manufacturing the hot-rolled strip steel for building structure described above, comprising the following steps performed in sequence:

1) smelting and casting
smelting and casting into slabs for the base layer and the corrosion-resistant layer, based on the above-mentioned compositions of the base layer and the corrosion-resistant layer respectively;
2) assembling slabs
grinding and polishing surfaces of slabs for the base layer and the corrosion-resistant layer, and performing peripheral weld sealing along contact surfaces of the slabs to form a clad slab comprising the base layer and the corrosion-resistant layer; performing a vacuum treatment to bonding interfaces after weld sealing;
3) heating and rolling the clad slab to form a steel strip, wherein

the clad slab is heated to 900-1000 °C;
rough rolling is performed at a temperature of ≥ 860 °C; finish rolling is performed at a temperature of 760-850 °C, preferably 780-850 °C; a pass reduction rate is 5-20%, preferably 10-15%; a cumulative reduction rate is ≥ 88%;

4) cooling
cooling the steel strip to a temperature of 300-450 °C and then coiling at this temperature to produce the hot-rolled strip steel.

Preferably, in step 2), the thickness of the corrosion-resistant layer is 1-10% of the thickness of the clad slab.

Preferably, in step 3), the interfacial transition layer formed between the base layer and the corrosion-resistant layer has a thickness of ≤8 μm.

Preferably, in step 4), the cooling comprises two stages of cooling, wherein in the first stage, the steel strip is cooled to 700-750 °C at a cooling rate of 2-10 °C/s after leaving the rolling mill stand; in the second stage, the steel strip is cooled to 300-450 °C at a cooling rate of 30-50 °C/s.

Through the manufacturing method according to the present disclosure, particularly the control of the heating, rolling, and cooling processes, the base layer in the strip steel exhibits a low yield-to-tensile ratio and good low-temperature impact toughness, while the corrosion-resistant layer possesses excellent corrosion resistance and high bonding strength.

## BRIEF DESCRIPTION OF THE DRAWINGS

FIG. 1 is a schematic diagram of the interlayer structure of a hot-rolled strip steel for building structure according to one embodiment of the present disclosure.

FIG. 2 is a schematic diagram of the interlayer structure of a hot-rolled strip steel for building structure according to another embodiment of the present disclosure.

FIG. 3 is a photograph of the microstructure of the corrosion-resistant layer of Example 3.

FIG. 4 is a scanned image of the interfacial transition layer between the base layer and the corrosion-resistant layer of Example 3.

FIG. 5 is a photograph of the microstructure of the base layer of Example 3.

## DETAILED DESCRIPTION

Unless otherwise defined, all technical and scientific terms used herein have the same meanings as commonly understood by those skilled in the art to which the present disclosure pertains. The terms used in the present disclosure are intended only to describe specific embodiments and are not intended to limit the disclosure.

Herein, the "content of the bainite + martensite" refers to the area ratio of the microstructure "bainite + martensite" in the photograph observed through metallographic examination.

Herein, the "industrial pure titanium" refers to dense metallic titanium with a titanium content of at least 99% and small amounts of impurities such as iron, carbon, oxygen, nitrogen, and hydrogen. "TA1, TA2, TA3, and TA4" designate grades of industrial pure titanium. This grading standard classifies pure titanium according to purity level (i.e., impurity content) based on GB/T3620.1-2016 *"Designation and composition of titanium and titanium alloys"*.

Herein, the "yield-to-tensile ratio" refers to the ratio of yield strength to tensile strength of steel, and its magnitude reflects the ability of steel to avoid strain concentration during plastic deformation.

Herein, the yield strength and tensile strength are measured in accordance with GB/T 6396-2008 *"Clad steel plates-Mechanical and technological test"* and GB/T 228-2010 *"Metallic materials-Tensile testing-Method of test at room temperature"*.

Herein, the impact energy $KV_2$/J at -40 °C (longitudinal) is measured in accordance with GB/T 6396-2008 *"Clad steel plates-Mechanical and technological test"* and GB/T 229-2020 *"Metallic materials-Charpy pendulum impact test method"*.

Herein, the grain size grading is performed as follows: The grain size of the ferrite microstructure in stainless steel and carbon steel is graded using the intercept method according to GB/T 6394-2017 *"Determination of estimating the average grain size of metal"*.

Herein, the corrosion rate against sea wave splash is measured as follows: coupon specimens of the clad steel plate are placed in the sea wave splash zone of the South China Sea for six months and then observed and recorded for corrosion. First, the coupons are cleaned and weighed. The lost weight is divided by the density to obtain the lost volume. The lost volume is then divided by the exposed area of the coupon to obtain the lost thickness.

Herein, the interfacial shear strength is measured according to GB/T 6396-2008 *"Clad steel plates-Mechanical and technological test"*.

Herein, the metals of the base layer and corrosion-resistant layer undergo recrystallization and grain growth under high temperature and high pressure. During this process, some grains pass through the interface. At the same time, due to the difference in elemental content on both sides of the interface, metal elements will diffuse from regions of high concentration to regions of low concentration at high temperature. The above two factors work together to form an interfacial transition layer. In the composition design of the base layer of the hot-rolled strip steel for building steel structures according to the present disclosure:

C: C has a solid solution strengthening effect in steel and can significantly improve the strength of steel. However, excessively high C content is detrimental to weldability and toughness. More importantly, when the C content is too high, C will diffuse towards the clad interface, forming a large amount of large granular TiC hard phase in the interfacial transition layer, reducing the strength of the clad interface. Therefore, to ensure shear strength at the interface, a low C content is required. Changes in C content have a smaller impact on the yield strength of the steel than on its tensile strength. Therefore, under the premise of ensuring the formability and weldability of the product, appropriately increasing the C content is beneficial to reducing the yield-to-tensile ratio of the steel. Therefore, the C content in the composition of the base layer in the present disclosure is controlled to 0.03%-0.13%.

Si: Adding Si to steel effectively deoxidizes and improves the purity of the steel. Furthermore, Si has a solid solution strengthening effect in steel and increase the strength and hardness of the steel. However, excessively high Si content is detrimental to the weldability of the material. Therefore, the Si content in the composition of the base layer in the present disclosure is controlled to 0.15%-0.35%.

Mn: Mn is the most cost-effective matrix-strengthening element. Mn can lower the austenite transformation temperature, delay pearlite transformation, refine ferrite grains, and improve steel strength. At the same time, Mn can also eliminate the influence of S on steel. However, excessively high Mn content can easily lead to the formation of segregation bands and martensite microstructure, which is detrimental to the toughness of the steel. Therefore, the Mn content in the composition of the base layer in the present disclosure is controlled to 1.00%-1.50%.

Al: Al is added to the steel in excess mainly as a deoxidation element to ensure that the O content in the steel is as low as possible. After deoxidation, excess Al combines with the N element in the steel to form AlN precipitates. During heating, AlN inhibits austenite grain growth, refines austenite grains, and improves the strength and toughness of the matrix. At the same time, the formation of AlN fixes some N in the matrix, reducing the diffusion of interstitial N atoms in the carbon steel base layer toward the clad interface and the formation of hard TiN in the interfacial transition layer (which degrades the interfacial shear strength of the clad plate). It also reduces the amount of Ti and Nb added, lowering the overall cost. Therefore, the Al content in the composition of the base layer in the present disclosure is controlled to 0.020%-0.050%, preferably 0.020%-0.030%.

Ti: Ti forms stable TiN or Ti(N,C) at high temperature and has an effect of fixing C and N, preventing interstitial C and N atoms in the carbon steel base layer from diffusing to the interface and forming hard TiN or Ti(N, C) precipitation in the interfacial transition layer, thereby resulting in a clad plate with high interfacial shear strength. At the same time, during heating, TiN inhibits austenite growth, refines austenite grains, and improves the strength and toughness of the matrix. During subsequent welding, TiN inhibits austenite grain growth particularly in the heat-affected zone (HAZ) immediately adjacent to the molten boundary of the weld and improves the toughness of the weld HAZ, thereby meeting to the requirements of high welding heat-input processes. Reducing the diffusion of C and N to the interface can improve the strength of the low-carbon matrix, resulting in a clad plate with high interfacial shear strength. Therefore, the Ti content in the base layer in the present disclosure is controlled to 0.0090% - 0.0160%.

Nb: Nb is present in steel in the forms of solid solution Nb and Nb(C, N), having an effect of solid solution drag and precipitation pinning during the recrystallization process. The addition of a small amount of Nb to the carbon steel for the base layer is primarily for increasing the recrystallization temperature, resulting in grain refinement in the recrystallized and un-recrystallized regions after rolling, which is beneficial to improving the low-temperature impact toughness of the carbon steel for the base layer. Due to the effect of Nb (C, N) precipitation phase, the prior austenite grains become finer, thus promoting the formation of finer recrystallized grains, achieving desired combination of high strength and high toughness. At the same time, Nb can fix interstitial C and N atoms in the matrix, reducing the diffusion of C and N to the interface, thereby resulting in a clad plate with high interfacial shear strength. Therefore, the Nb content in the base layer in the present disclosure is controlled to 0.060%-0.100%.

Cu: Cu has a solid solution strengthening effect, and as the Cu content increases, the room-temperature impact toughness of the steel slightly increases. Therefore, the Cu content in the base layer in the present disclosure is controlled to 0.10% - 0.25%.

N: N can react with Ti and Al to form second-phase particles, refining austenite grains and improving the strength and toughness of the matrix. However, when the N content is too high, the amount of TiN generated is large and the particles are too coarse, which can affect the plasticity and toughness of carbon steel. Therefore, the N content in the base layer in the present disclosure is controlled to 0.0005% - 0.0050%.

Ni: Ni is an element that stabilizes austenite and has a certain effect on improving toughness and strength. The addition of Ni to steel can significantly improve the low-temperature impact toughness of the steel. However, Ni is expensive, thus an excessive addition of Ni will increase the cost of the clad plate. Therefore, an appropriate amount of Ni is added to the base layer in the present disclosure, and the Ni content in the base layer in the present disclosure is controlled to 0.2%-1.0%.

Cr: Cr is a strong carbide-forming element. It has a low diffusion rate in austenite, and it also hinders the diffusion of C. During low temperature process, Cr and C form fine carbides, which has an effect of precipitation strengthening. At the same time, Cr can fix interstitial C and N atoms in the matrix and reduce the diffusion of C and N to the interface, resulting in a clad plate with high interfacial shear strength. However, Cr in steel increases matrix strength while reducing toughness. Therefore, the Cr content in the composition of the base layer in the present disclosure is controlled to 0.10% - 0.65% to achieve the optimal match between strength and toughness.

V: V is a strong carbonitride-forming element. The addition of V in combination with Ti and Nb to steel can form fine composite carbonitrides and widen the precipitation temperature range, effectively preventing austenite grain growth, inhibiting recrystallization, and improving the strength and toughness of the carbon steel for the base layer. At the same time, carbonitride of V has a low precipitation temperature; and during phase transformation, precipitation can effectively prevent ferrite grain growth and strengthen the ferrite matrix. Therefore, an appropriate amount of V is added to the base layer of the present disclosure, and the V content in the base layer in the present disclosure is controlled to 0.08% - 0.25%.

In the hot-rolled strip steel for building structure according to the present disclosure, S and P are both inevitable impurity elements, and their content should be kept as low as possible. However, considering the actual steelmaking capability of the steel plant, the S and P contents in the composition of the base layer in the present disclosure are controlled to: $S \leq 0.010\%$; and $P \leq 0.003\%$.

In addition, in the chemical composition design of the base layer of the hot-rolled strip steel for building steel structures according to the present disclosure:

Both Cu and Ni can improve the toughness of the base layer, and the combined addition thereof has a particularly significant effect. At the same time, the addition of Ni can reduce the diffusion rate of C in the steel and reduce the diffusion of C to the interface. Therefore, in order to achieve better properties, the Cu and Ni contents in the composition of the base layer in the present disclosure preferably further satisfy: $0.32\% \leq Cu + Ni \leq 1.15\%$, which contributes to control the thickness of the interfacial transition layer to $\leq 8\mu m$.

Ti, Nb, Cr and V are all strong carbonitride-forming elements, and they can form corresponding carbonitrides in the carbon steel for the base layer. This can fix the interstitial atoms in the base layer, and hinder the diffusion of interstitial atoms C and N towards the interface to form large-particle aggregated carbonitrides in the interfacial transition layer, which helps to control the interfacial transition layer $\leq 8\mu m$, thereby improving the interfacial shear strength. At the same time, Ti, Nb and Cr have effects of refining the grains of the carbon steel for the base layer and improving toughness at different stages of hot rolling processing. Therefore, to obtain better properties, the Ti, Nb, Cr, and V contents in the composition of the base layer in the present disclosure preferably further satisfy: $2(C+N) \leq Ti+Nb+Cr+V \leq 0.90\%$.

Industrial pure titanium, preferably TA1, TA2, TA3, and TA4, is used in the corrosion-resistant layer in the present disclosure. The composition of the industrial pure titanium meets the standard of GB/T3620.1-2016 *"Designation and composition of titanium and titanium alloys"*.

The manufacturing method for the hot-rolled strip steel for building structure according to the present disclosure comprises the following steps:

1) smelting and casting

smelting and casting into slabs for the base layer and the corrosion-resistant layer, based on the above-mentioned compositions of the base layer and the corrosion-resistant layer respectively;

2) assembling slabs

grinding and polishing surfaces of slabs for the base layer and the corrosion-resistant layer, and performing peripheral weld sealing along contact surfaces of the slabs to form a clad slab comprising the base layer and the corrosion-resistant layer; performing a vacuum treatment to bonding interfaces after weld sealing;

3) heating and rolling the clad slab to form a steel strip, wherein

the clad slab is heated to 900-1000 °C;
rough rolling is performed at a temperature of $\geq 860$ °C; finish rolling is performed at a temperature of 760-850 °C; a pass reduction rate is 5-20%; a cumulative reduction rate is $\geq 88\%$;

4) cooling

cooling the steel strip to a temperature of 300-450 °C and coiling at this temperature to produce the hot-rolled strip steel.

Preferably, in step 4), the cooling comprises two stages of cooling, wherein in the first stage, the steel strip is cooled to 700-750 °C at a cooling rate of 2-10 °C/s after leaving the rolling mill stand; then in the second stage, the steel strip is cooled to 300-450 °C at a cooling rate of 30-50 °C/s.

Preferably, in step 2), the thickness of the corrosion-resistant layer is 1-10% of the total thickness of the clad slab.

Preferably, in step 3), a pass reduction rate used during the rolling is 10-15%.

In the manufacturing method according to the present disclosure:

1) Smelting: P and S elements can deteriorate the fracture toughness of steel. Therefore, during the smelting process, P and S should be controlled at a low level to improve the quality of the steel slab. Preferably, clean steel production technology is adopted to reduce the gas and inclusion content in the steel to improve the comprehensive performance, particularly the resistance to laminar tearing, of the steel.

2) Assembling slabs: preferably, the thickness of the corrosion-resistant layer is 1-10% of the total thickness of the clad slab. The slabs for corrosion-resistant layer and base layer carbon steel are pre-treated, the contact surfaces of the slabs are subjected to peripheral weld sealing, and the obtained bonding interfaces after weld sealing are subjected to vacuum treatment. The vacuum treatment can protect the surface of the corrosion-resistant layer from oxidation, and is an important factor in ensuring the corrosion resistance of the corrosion-resistant layer in the sea wave splash zone. It can also ensure that the corrosion-resistant layer is prevented from defects such as edge cracking and crushing during subsequent high cumulative reduction deformation.

3) Heating: for single carbon steel, the slab heating temperature is generally controlled to 1000-1250 °C, which is beneficial to the dissolution and full diffusion of precipitates in the steel, promotes the homogenization of elements in the slab, and allows the microalloy elements to exert their strengthening effects in the steel. For single industrial pure titanium plates, the heating temperature is generally controlled to 850-1000 °C. If the heating temperature is too high, β phase transformation will occur, and the β phase will grow rapidly, deteriorating the property of the industrial pure titanium. High heating temperature will allow for full diffusion of elements, promoting the subsequent achievement of 100% metallurgical bonding at the interface. However, excessively high heating temperature will increase the tendency for austenite grains to coarsen, increase the difficulty of subsequent rolling control, and more importantly, accelerate the diffusion of C, N, Ti, and Fe to the interface, forming thick brittle precipitates and intermetallic compounds at the interface, resulting in a thick interfacial transition layer, deteriorating the interfacial shear strength. Taking the above factors into consideration, the method according to the present disclosure adopts a lower heating temperature than conventional carbon steel production, controlling the heating temperature to 900-1000 °C.

4) Rolling: The rough rolling temperature is controlled to 860 °C or more. High reduction rates are applied in the high-temperature rough rolling zone to allow the microstructure to fully recrystallize, refine the grains, improving the strength and toughness of the material. Controlled rolling is performed in the non-recrystallization zone of the finish rolling, and austenite recrystallization no longer occurs at this stage. Through appropriate reduction rate and finishing rolling temperature, deformation energy and deformation dislocations are accumulated, which allows for the formation of high-density deformation bands within the austenite grains, increases the number of nucleation sites for the ferrite phase transformation, and further refines grain size after the matrix transformation, improving the strength and toughness of the material. Simultaneously, deformation induces the precipitation of carbonitrides of Nb, Ti, Cr, and V during this stage, enhancing the strength of the matrix and inhibiting the diffusion of C to the interface, thereby preventing the formation of excessively thick TiC at the interface and deteriorating interfacial shear strength. The pass reduction rate is controlled to 5% - 20%, and the cumulative reduction rate is controlled to ≥88%. Preferably, the finish rolling is controlled to perform at a temperature of 780-850 °C, which ensures the corrosion resistance of titanium while avoiding rolling the base layer in the two-phase region, and results in a base layer with a microstructure of ferrite + bainite + martensite, wherein the ferrite has an average grain size of ≥ grade 8.5, and the content of bainite + martensite is 5%-15%. During the rolling process, the corrosion-resistant layer and the base layer only undergo metallurgical bonding and necessary size changes, without any changes in the compositions of the corrosion-resistant layer and the base layer.

5) Cooling: the type of microstructure, size of microstructure and various contents after rolling can be controlled by controlling the starting cooling, finishing cooling and cooling rate. If the cooling rate is too high, a large amount of bainite and martensite will form, wherein the martensite phase is a structure with low toughness and high yield-to-tensile ratio, which is detrimental to the properties of the steel plate. If the cooling rate is too low, a large amount of coarse ferrite microstructure will be generated, and the coarse ferrite microstructure is beneficial to crack propagation, resulting in a decrease in impact property. Therefore, the cooling rate should be appropriately controlled. Controlling the finishing rolling temperature of finish rolling can avoid the formation of abnormally coarse microstructure due to rolling in the two-phase region. At the same time, it allows for rapid cooling to the phase transition temperature after rolling, which further inhibits the growth of the microstructure, improving the strength and low-temperature impact toughness of the material by refining the grains, and forming hard phase microstructure of 5% or more to ensure strength. Preferably, a staged cooling method is adopted. After the steel strip leaves the rolling mill stand, it is first cooled to the ferrite phase transformation temperature at a cooling rate of ≤10 °C/s, then rapidly cooled to 350-450 °C at a cooling rate of 30 °C/s -50 °C/s, and then coiled, thereby obtaining a small amount of bainite and martensite microstructure, and achieving microstructure recovery during the coiling process, and promoting the precipitation of V carbonitride, ensuring that the base layer has a low yield-to-tensile ratio and high low-temperature impact toughness.

If the corrosion-resistant layer is too thick, it will affect the mechanical properties of the material and production costs. If the corrosion-resistant layer is too thin, it will reduce the corrosion resistance and service life of the material. Preferably, during the assembly process, the thickness of the corrosion-resistant layer is controlled to be 1-10% of the total thickness of the clad slab.

Through cladding the corrosion-resistant layer with the base layer, along with the design of compositions and thickness ratio of both layers, a corrosion-resistant layer resistant to sea wave splash zone corrosion is formed on the surface of the base layer (i.e., carbon strip steel) by rolling process. This ultimately results in the hot-rolled strip steel for building structure according to the present disclosure, which exhibits sea wave splash zone corrosion resistance, excellent mechanical properties, and high economic efficiency. This strip steel can then be processed into structural parts and effectively used as steel structural parts for use in sea wave splash zone environments.

Compared to existing technologies, the hot-rolled strip steel for building structure according to the present disclosure offers the following advantages:

The hot-rolled strip steel for building structure according to the present disclosure is designed with a low-carbon microalloying composition, achieving an excellent bonding of titanium and carbon steel without the addition of a metal isolation layer, and effectively controlling the thickness of the interfacial transition layer, so that the mechanical properties of the base layer (carbon steel) can meet the requirement of the corresponding strength grade without reducing the corrosion resistance *per se* of the corrosion-resistant layer.

The hot-rolled strip steel for building structure according to the present disclosure, by reducing the C content, reduces the formation of TiC compounds in the interfacial transition layer and carbonitrides in the base layer, hindering grain growth and improving the low-temperature impact toughness of the base layer. At the same time, the addition of microalloy elements, along with rational rolling and cooling processes, addresses the issue of low material strength in case of low carbon, achieving that the base layer has a yield strength of $\geq$460 MPa and a tensile strength of $\geq$580 MPa, while has a yield-to-tensile ratio of $\leq$0.81 and an impact energy at -40 °C $\geq$190J, all of which are higher than the performance requirements in Chinese national standard GB/T 19879-2015 *"Steel Plate for building structure"*.

Chinese Patent Application CN201210260231.7 obtains a titanium-steel clad plate with an interface bonding ratio of 99.6%-100% by adding a nickel plate as an isolation layer between the cladding layer and the base layer to prevent the formation of TiC at the interface. In contrast, the hot-rolled strip steel for building structure according to the present disclosure reduces the nickel addition and lowers the production costs through a low-carbon and microalloying design; At the same time, it also achieves a complete metallurgical bonding with a 100% interface bonding ratio by optimizing processes such as heating and rolling to form a transition layer microstructure of a certain thickness and reduces the formation of brittle phase TiC in the interfacial transition layer.

In Chinese Patent Application CN201710769999.X, the heating temperature of the slab is 500-700 °C, the total reduction rate is 60-70%, and the maximum interfacial shear strength of the produced strip steel is 182 MPa. In contrast, the present inventors fully considered the impact of the high-temperature phase transformation issue of the industrial pure titanium for the corrosion-resistant layer on corrosion resistance and the control of the strength and toughness of the carbon steel for the base layer, along with the low-carbon microalloy design and the overall design of the processing technology. The heating temperature of the clad slab is set to 900-1000 °C. At this temperature, phase transformation in the corrosion-resistant layer is prevented and sufficient dissolution of precipitates in the carbon steel for the base layer is ensured, which refines the grain size of the base layer during controlled rolling, improving the strength and toughness of the base layer. Furthermore, the cumulative reduction rate is controlled to $\geq$85% to break up the brittle phase in the interfacial transition layer, improving the interfacial shear strength.

Chinese Patent Applications CN201210260231.7 and CN201710769999.X primarily avoid the formation of brittle Ti compounds by adding an additional nickel-based alloy isolation layer between titanium and carbon steel. In contrast, the present disclosure achieves a complete metallurgical bonding with a 100% interface bonding ratio through the design of composition and process without the addition of an isolation layer. Furthermore, the hot-rolled strip steel for building structure according to the present disclosure is different from the above two patent applications in the way of assembling slabs, and is significantly different from the above two patent applications in the material of the carbon steel for the base layer.

Through the process conditions in the present disclosure, both the corrosion resistance *per se* of the industrial pure titanium of the corrosion-resistant layer and the mechanical properties of the base layer can be ensured, solving the traditional problem of the incompatible processing windows between titanium and carbon steel due to their large differences. At the same time, the elements of the base layer and the corrosion-resistant layer are controlled to fully diffuse to form an interfacial transition layer of $\leq 8\mu$m. The layer has a microstructure of fine grains with an average grain size of 15-40 $\mu$m and comprises (Ti, Nb)C precipitate particles of < 120nm, strengthening the interface bonding properties and ensuring an interfacial shear strength of $\geq$ 268 MPa, which is significantly higher than the interfacial shear strength of 182 MPa in Chinese Patent Application CN201710769999.X.

The process described in Chinese Patent Application CN201811327623.4 achieves cladding through warm rolling, which requires a subsequent two-stage heat treatment including: a primary annealing at 500-600 °C for 20-60 minutes and a recrystallization annealing at 680-700 °C for 30-120 minutes. This process involves a method for manufacturing a non-hot-rolled clad titanium strip steel, which is completely different from the manufacturing method according to the present disclosure.

The process described in Chinese Patent Application CN201510543767.3 adopts a heating temperature of 850-900 °C, a finishing rolling temperature of 700 °C or less, a single pass reduction rate of 20-30%, and a total rolling reduction rate of $\geq$90%. The titanium-steel clad plate has a shear strength of > 240 MPa. The pass reduction rate and total reduction rate required by this patent application are both very high, which can easily lead to edge weld cracking during rolling, disrupting vacuum and making cladding difficult, resulting in poor rolling stability. In contrast, the pass reduction rate in the present disclosure is controlled to 5-20%, which can effectively prevent the weld from cracking during rolling, ensuring the vacuum degree inside the slabs, thereby improving the interfacial shear strength, and stability and success rate of rolling.

Chinese Patent Application CN201610994234.1 relates to a method for producing a titanium-steel clad plate.

First, titanium plates and steel plates are assembled to form a symmetrical multi-layer assembled slab of steel plate-titanium plate-separating agent-titanium plate-steel plate, which is then cladded by rolled cladding or exploded cladding; the clad slab is then annealed and pickled in a continuous annealing and pickling line, first heated to 500-750 °C to recrystallize the core titanium plate, and then heated to 950-1050 °C to recrystallize the base steel plate. However, this patent application does not specifically specify the rolling process or the corrosion and structure properties of the resulting steel plate. The process described in this patent application differs significantly from the method in the present disclosure in terms of manufacturing process. The method according to the present disclosure does not require a two-stage heat treatment, thereby avoiding excessive diffusion of titanium, iron, and carbon elements, the generation of brittle substances such as iron-titanium intermetallic compounds and titanium carbide, and the deterioration of interfacial shear strength.

The corrosion-resistant layer material of the titanium-steel clad plate disclosed in Chinese Patent Application CN201710996925.X is TA2, wherein the thickness of the titanium cladding layer is 0.2-1mm. The manufacturing process is as follows: the clad sab after seal welding treatment is heated to 900-920 °C and kept for a time period, the starting rolling temperature is 880-900 °C, the finishing rolling temperature is 800 °C or more, and it is air-cooled to room temperature. The resulting clad plate achieves a shear strength of 241 MPa. In contrast, the method according to the present disclosure adopts a heating temperature of 900-1000 °C and finish rolling is performed at a temperature of 750-850 °C. The method according to the present disclosure adopts a two-stage cooling process for cooling. A hot-rolled plate with TA1, TA2, TA3, or TA4 as the corrosion-resistant layer whose thickness is 1-10% of the total thickness of the clad slab and an interfacial shear strength of ≥268 MPa can be achieved by the method according to the present disclosure.

The process disclosed in Chinese Patent Application CN201710983322.6 uses similar assembly mode and heating process to those in Chinese Patent Application CN201710996925.X, and uses a pass reduction rate of 25-30% and a total reduction rate of ≥85%. While controlling the pass reduction rate and the total reduction rate, the thickness of the titanium-steel clad plate is limited to 3-16 mm, a finishing rolling temperature of 800 °C or more is adopted, followed by air cooling to room temperature; surface treatment is performed to obtain a titanium-steel clad plate with a titanium cladding layer thickness of ≤1mm. In contrast, in the method according to the present disclosure, a pass reduction rate of 5-20% is used to control rolling stability, and a two-stage cooling mode is used to ensure the microstructure type of the material, thereby controlling the yield-to-tensile ratio and toughness. Furthermore, the method according to the present disclosure also differs significantly from the process disclosed in Chinese Patent Application CN201710983322.6 in terms of corrosion-resistant layer thickness and total clad strip steel thickness.

The hot-rolled strip steel for building structure according to the present disclosure can address the challenges faced when using stainless steel or carbon steel in sea wave splash zone environments. Such hot-rolled strip steel for building structure can be effectively applied to the manufacture of steel structure parts for use in sea wave splash zone environments, for example, steel structure parts in the sea wave splash zone of facilities such as harbor terminals and offshore oil platforms. Such hot-rolled strip steel for building structure can meet the requirements of these structure parts for corrosion resistance and mechanical properties in the sea wave splash zone, significantly improving the applicability, safety, and durability of these structure parts, and has great economic and social benefits.

**EXAMPLES**

The technical solutions of the present disclosure are further described in detail below with reference to the examples and accompanying drawings. It should be understood that the following examples are merely intended to illustrate specific embodiments of the present disclosure and do not constitute any limitation on the protection scope of the present disclosure. All reagents used in the examples are commercially available. Experimental methods without specific conditions specified in the examples were performed according to conventional conditions known in the art or the conditions recommended by the manufacturer.

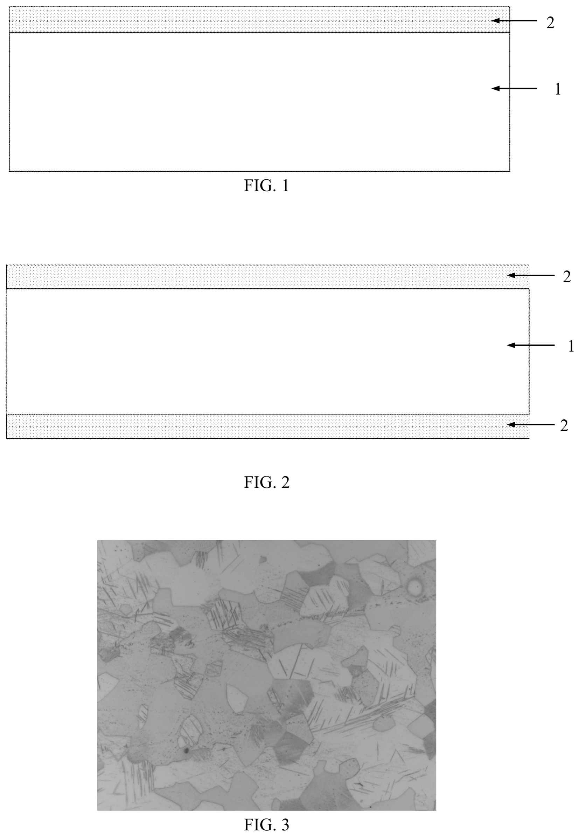

Referring to Figs. 1, 2, and 4, schematic diagrams of two interlayer structures of the hot-rolled strip steel for building structure according to the present disclosure are shown, wherein 1 represents the base layer, 2 represents the corrosion-resistant layer, and 3 represents the interfacial transition layer.

The compositions of base layer and corrosion-resistant layer of Examples 1-8 and Comparative Examples 1-5 are shown in Table 1. Examples 1-8 and Comparative Examples 1-5 were manufactured by the following steps:

1) smelting and casting
smelting and casting into slabs for the base layer and the corrosion-resistant layer, based on the compositions of the base layer and the corrosion-resistant layer shown in table 1 respectively;
2) assembling slabs
grinding and polishing surfaces of slabs for the base layer and the corrosion-resistant layer, and performing peripheral weld sealing along the contact surfaces of the slabs to form a clad slab comprising the base layer and the corrosion-resistant layer; performing a vacuum treatment to bonding interfaces after weld sealing;
3) heating and rolling the clad slab to form a steel strip, wherein

the clad slab was heated to 900-1000 °C;
rough rolling was performed at a temperature of ≥ 860 °C; finish rolling was performed at a temperature of 760-850 °C; the pass reduction rate was 5-20%; the cumulative reduction rate was ≥ 88%;

4) cooling
performing two-stage cooling to the steel strip to cool to a temperature of 300-450 °C, and then coiling at this temperature.

The specific parameters of manufacturing process of Examples 1-8 and Comparative Examples 1-5 are shown in Table 2.

Then, performance tests were performed on the base layers, corrosion-resistant layers, and clad steel plates of Examples 1-8 and Comparative Examples 1-5. Yield strength and tensile strength were measured in accordance with GB/T 6396-2008 *"Clad steel plates-Mechanical and technological test"* and GB/T 228-2010 *"Metallic materials-Tensile testing-Method of test at room temperature"*. Impact energy at -40 °C $KV_2$/J (longitudinal) was measured in accordance with GB/T 6396-2008 *"Clad steel plates-Mechanical and technological test"* and GB/T 229-2020 *"Metallic materials-Charpy pendulum impact test method"*. Grain size grading was performed as follows: The grain size of the ferrite microstructure in stainless steel and carbon steel was graded using the intercept method according to GB/T 6394-2017 *"Determination of estimating the average grain size of metal"*.

The metallographic structures and mechanical properties of the base layers and corrosion-resistant layers, as well as the thickness and mechanical properties of the interfacial transition layers, in the clad steel plates of Examples 1-8 and Comparative Examples 1-5 are shown in Table 3.

Fig. 3 shows the metallographic structure of the corrosion-resistant layer of Example 3. As shown in Fig. 3, the metallographic structure of the corrosion-resistant layer of Example 3 was single, equiaxed α-Ti with an average grain size of 103.4 μm.

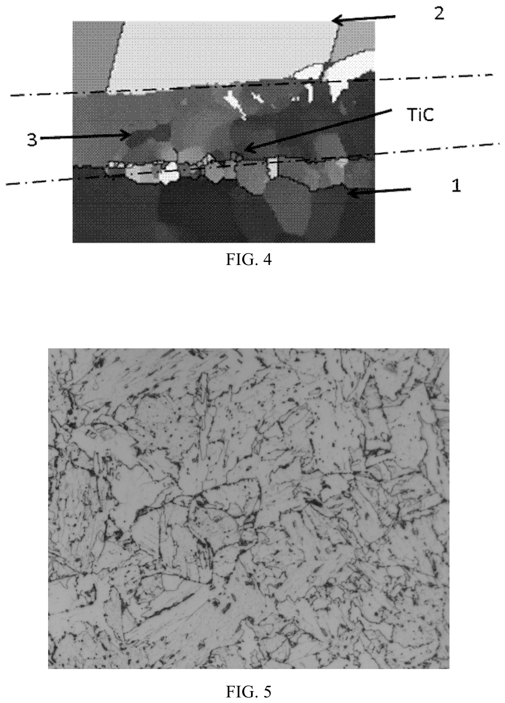

Fig. 4 shows the interfacial transition layer of Example 3. As shown in Fig. 4, the interfacial transition layer had a thickness of 7.6 μm, and the discontinuous fine particles therein were TiC, with a size of less than 120 nm.

Fig. 5 shows the metallographic structure of the base layer of Example 3. As shown in Fig. 5, the metallographic structure of the base layer carbon steel of Example 3 was ferrite + bainite + martensite, wherein the volume fraction of bainite + martensite was 7.8% and the ferrite had a grain size of ≥ grade 8.5.

Further, the corrosion resistance of the clad steel plates of Examples 1-8 and Comparative Examples 1-5 was tested, and the results are shown in Table 4. Specifically, the corrosion resistance was tested as follows: After the coupon specimens of the clad steel plates of Examples 1-8 and Comparative Examples 1-5 were placed in the sea wave splash zone of the South China Sea (different placement sites were selected, namely scenes 1 to 8) for 6 months, and the corrosion conditions were observed and recorded.

Since Comparative Examples 1-5 adopted composition design and heat treatment conditions that failed to meet the requirements, some properties of the clad steel plates failed to meet the use requirements (performance parameters were not within the scope defined by the present invention). Specifically:

In Comparative Example 1, the pass reduction rate and cumulative reduction rate did not meet the process requirements of the present disclosure; as a result, the grain size was coarse, the yield strength and impact energy of the base layer did not meet the requirements, and the corrosion resistance was poor.
In Comparative Example 2, the Ti content was too high; as a result, the impact property failed to meet the requirements and the corrosion resistance was poor.
In Comparative Example 3, the coiling temperature did not meet the process requirements of the present disclosure, and the yield-to-tensile ratio failed to meet the requirements.
In Comparative Example 4, V was not added, and the cooling rate after leaving the mill stand and the second-stage cooling rate did not meet the process requirements of the present disclosure, lacking the necessary precipitation strengthening effect.
In Comparative Example 5, the heating temperature and the finish rolling temperature did not meet the process requirements of the present disclosure; the transition layer thickness was too high, the shear strength did not meet the requirements, and the corrosion resistance was poor.
In contrast, in Examples 1-8, the base layer exhibited a yield strength of ≥460 MPa, a tensile strength of ≥580 MPa, a yield-to-tensile ratio of ≤0.81, and an impact energy at -40 °C of ≥190 J; and the corrosion-resistant layer exhibited a corrosion rate against sea wave splash of ≤0.006 mm/year.

Table 1 (the balance being Fe and inevitable impurities)

| | Base layer | | | | | | | | | | | Corrosion-resistant layer |
|---|---|---|---|---|---|---|---|---|---|---|---|---|
| Unit: in percentage by weight (wt%) | | | | | | | | | | | | |
| | C | Si | Mn | Al | Ti | Nb | Cu | N | Ni | Cr | V | |
| Example 1 | 0.04 | 0.15 | 1.04 | 0.023 | 0.0098 | 0.061 | 0.17 | 0.0013 | 0.2 | 0.25 | 0.25 | TA4 |
| Example 2 | 0.13 | 0.35 | 1.12 | 0.047 | 0.0140 | 0.073 | 0.18 | 0.0006 | 0.4 | 0.19 | 0.09 | TA2 |
| Example 3 | 0.09 | 0.17 | 1.42 | 0.027 | 0.0158 | 0.086 | 0.24 | 0.0025 | 0.9 | 0.10 | 0.14 | TA2 |
| Example 4 | 0.10 | 0.32 | 1.24 | 0.048 | 0.0091 | 0.091 | 0.23 | 0.0005 | 0.6 | 0.32 | 0.10 | TA3 |
| Example 5 | 0.03 | 0.33 | 1.36 | 0.021 | 0.0105 | 0.078 | 0.15 | 0.0048 | 0.5 | 0.42 | 0.23 | TA4 |
| Example 6 | 0.07 | 0.23 | 1.09 | 0.035 | 0.0123 | 0.096 | 0.11 | 0.0012 | 1.0 | 0.63 | 0.16 | TA1 |
| Example 7 | 0.11 | 0.28 | 1.43 | 0.042 | 0.0137 | 0.091 | 0.25 | 0.0035 | 0.8 | 0.36 | 0.13 | TA1 |
| Example 8 | 0.10 | 0.19 | 1.29 | 0.031 | 0.0123 | 0.081 | 0.13 | 0.0042 | 0.3 | 0.19 | 0.08 | TA2 |
| Comparative Example 1 | 0.13 | 0.18 | 1.26 | 0.03 | 0.0094 | 0.08 | 0.15 | 0.0021 | 0.3 | 0.26 | 0.13 | TA2 |
| Comparative Example 2 | 0.05 | 0.15 | 1.43 | 0.05 | **0.017** | 0.09 | 0.10 | 0.0026 | 0.2 | 0.23 | 0.25 | TA1 |
| Comparative Example 3 | 0.03 | 0.22 | 1.04 | 0.02 | 0.0164 | 0.06 | 0.25 | 0.0005 | 0.9 | 0.42 | 0.09 | TA3 |
| Comparative Example 4 | 0.07 | 0.35 | 1.36 | 0.04 | 0.0132 | 0.07 | 0.12 | 0.0012 | 0.8 | 0.43 | - | TA4 |
| Comparative Example 5 | 0.05 | 0.24 | 1.48 | 0.03 | 0.0155 | 0.10 | 0.19 | 0.0046 | 0.5 | 0.16 | 0.2 | TA3 |

Table 2

| | Thickness of clad slab [mm] | Thickness of corrosion-resistant layer [mm] | Heating temperature [°C] | Rough rolling temperature [°C] | Finish rolling temperature [°C] | Pass reduction rate [%] | Cumulative reduction rate [%] | First stage | | Cooling rate during second stage [°C/s] | Coiling temperature [°C] | Thickness of finished product [mm] |
|---|---|---|---|---|---|---|---|---|---|---|---|---|
| | | | | | | | | Cooling rate [°C/s] | Cooling temperature [°C] | | | |
| Example 1 | 170 | 11 | 970 | 875 | 833 | 5 | 88 | 2 | 749 | 36 | 449 | 16 |
| Example 2 | 189 | 1.9 | 956 | 879 | 784 | 12 | 92 | 9 | 721 | 50 | 420 | 15 |
| Example 3 | 220 | 13 | 923 | 862 | 797 | 19 | 97 | 3 | 703 | 30 | 358 | 6 |
| Example 4 | 180 | 8 | 987 | 883 | 814 | 20 | 98 | 4 | 718 | 41 | 398 | 3 |
| Example 5 | 230 | 18 | 903 | 864 | 789 | 17 | 95 | 5 | 736 | 34 | 372 | 11 |
| Example 6 | 205 | 19 | 956 | 876 | 763 | 13 | 98 | 6 | 702 | 37 | 302 | 5 |
| Example 7 | 176 | 6 | 999 | 889 | 844 | 9 | 99 | 7 | 729 | 44 | 321 | 1 |
| Example 8 | 196 | 11 | 934 | 871 | 828 | 16 | 96 | 6.5 | 711 | 42 | 428 | 8 |
| Comparative Example 1 | 140 | 13.5 | 956 | 878 | 840 | **3** | **86** | 3 | 730 | 35 | 450 | 16 |
| Comparative Example 2 | 224 | 13 | 934 | 864 | 821 | 17 | 96 | 4 | 719 | 50 | 399 | 9 |
| Comparative Example 3 | 176 | 8 | 908 | 871 | 802 | 13 | 95 | 10 | 745 | 46 | **545** | 8 |
| Comparative Example 4 | 256 | 10 | 998 | 868 | 810 | 5 | 99 | **14** | 723 | **20** | 373 | 2 |
| Comparative Example 5 | 231 | 16 | **1200** | 863 | **950** | 19 | 92 | 5 | 447 | 30 | 447 | 10 |

EP 4 692 407 A1

Table 3

| | | Base layer | | | | | | | | | | Interfacial transition layer | |
|---|---|---|---|---|---|---|---|---|---|---|---|---|---|
| | Metallographic structure | Grain size grade of ferrite | Bainite+ martensite content [%] | Yield strength [MPa] | | Tensile strength [MPa] | | Yield-to-tensile ratio | | Impact energy $KV_2$/J at 40 °C (longitudinal) | | Thickness of interfacial transition layer [$\mu$m] | Shear Strength [MPa] |
| | | | | Trans verse | Longit udinal | Transv erse | Longit udinal | Transv erse | Longit udinal | | | | |
| Example 1 | Ferrite+bainite+ martensite | 9 | 6.3 | 468 | 492 | 697 | 620 | 0.67 | 0.79 | 201 | | 7.5 | 270 |
| Example 2 | Ferrite+bainite+ martensite | 8.5 | 9.9 | 495 | 464 | 612 | 672 | 0.81 | 0.69 | 294 | | 7.2 | 300 |
| Example 3 | Ferrite+bainite+ martensite | 8.5 | 9.1 | 510 | 505 | 635 | 640 | 0.80 | 0.79 | 242 | | 7.6 | 294 |
| Example 4 | Ferrite+bainite+ martensite | 10 | 14.8 | 491 | 501 | 631 | 632 | 0.78 | 0.79 | 278 | | 6.3 | 278 |
| Example 5 | Ferrite+bainite+ martensite | 9 | 8.5 | 478 | 466 | 648 | 586 | 0.74 | 0.80 | 245 | | 6.5 | 286 |
| Example 6 | Ferrite+bainite+ martensite | 9 | 5.2 | 510 | 498 | 643 | 627 | 0.79 | 0.79 | 246 | | 7.1 | 295 |
| Example 7 | Ferrite+bainite+ martensite | 10 | 6.4 | 484 | 508 | 659 | 649 | 0.73 | 0.78 | 235 | | 5.9 | 294 |
| Example 8 | Ferrite+bainite+ martensite | 8.5 | 7.2 | 480 | 498 | 623 | 634 | 0.77 | 0.79 | 277 | | 7.3 | 275 |
| Comparative Example 1 | **Ferrite+bainite** | **7** | **4.8** | **420** | **413** | 593 | 590 | 0.71 | 0.70 | **72** | | 6.9 | 269 |
| Comparative Example 2 | Ferrite+bainite+ martensite | 9 | 10.4 | 469 | 503 | 656 | 628 | 0.71 | 0.80 | **110** | | 7.4 | 279 |
| Comparative Example 3 | Ferrite+bainite+ martensite | 9 | **22.4** | 534 | 526 | 595 | 592 | **0.90** | **0.89** | 197 | | 6.5 | 296 |
| Comparative Example 4 | Ferrite+bainite+ martensite | **8** | **17.8** | 502 | 469 | 630 | 618 | 0.80 | 0.76 | 237 | | 7.8 | 284 |

(continued)

| | Base layer | | | | | | | | | | Interfacial transition layer | |
|---|---|---|---|---|---|---|---|---|---|---|---|---|
| | Metallographic structure | Grain size grade of ferrite | Bainite+ martensite content [%] | Yield strength [MPa] | | Tensile strength [MPa] | | Yield-to-tensile ratio | | Impact energy KV$_2$/J at 40 °C (longitudinal) | Thickness of interfacial transition layer [$\mu$m] | Shear Strength [MPa] |
| | | | | Trans verse | Longit udinal | Transv erse | Longit udinal | Transv erse | Longit udinal | | | |
| Comparative Example 5 | Ferrite+bainite+ martensite | __7__ | 11 | 463 | 502 | 653 | 678 | 0.71 | 0.74 | 277 | __13__ | __101__ |

Table 4

| | Scene 1 | Scene 2 | Scene 3 | Scene 4 | Scene 5 | Scene 6 | Scene 7 | Scene 8 |
|---|---|---|---|---|---|---|---|---|
| Chloride ion concentration (%) | 9 | 42 | 26 | 16 | 15 | 39 | 12 | 26 |
| Temperature (°C) | 28 | 26 | 40 | 45 | 16 | 50 | 31 | 12 |
| | Corrosion rate (mm/year) | | | | | | | |
| Example 1 | 0.004 | 0.003 | 0.005 | 0.004 | 0.001 | 0.005 | 0.004 | 0.004 |
| Example 2 | 0.004 | 0.003 | 0.004 | 0.005 | 0.003 | 0.003 | 0.003 | 0.004 |
| Example 3 | 0.002 | 0.002 | 0.005 | 0.003 | 0.003 | 0.005 | 0.002 | 0.003 |
| Example 4 | 0.001 | 0.004 | 0.003 | 0.004 | 0.003 | 0.004 | 0.004 | 0.004 |
| Example 5 | 0.002 | 0.003 | 0.005 | 0.006 | 0.001 | 0.006 | 0.003 | 0.002 |
| Example 6 | 0.001 | 0.003 | 0.004 | 0.005 | 0.001 | 0.005 | 0.003 | 0.003 |
| Example 7 | 0.002 | 0.002 | 0.004 | 0.006 | 0.004 | 0.005 | 0.003 | 0.004 |
| Example 8 | 0.002 | 0.005 | 0.005 | 0.005 | 0.002 | 0.005 | 0.004 | 0.002 |
| Comparative Example 1 | 0.002 | 0.003 | 0.003 | 0.005 | 0.002 | **0.007** | 0.004 | 0.003 |
| Comparative Example 2 | 0.002 | 0.005 | 0.004 | 0.006 | 0.002 | **0.007** | 0.002 | 0.002 |
| Comparative Example 3 | 0.002 | 0.004 | 0.005 | 0.006 | 0.003 | 0.005 | 0.003 | 0.003 |
| Comparative Example 4 | 0.004 | 0.004 | 0.005 | 0.006 | 0.003 | 0.005 | 0.003 | 0.003 |
| Comparative Example 5 | 0.004 | **0.009** | **0.007** | **0.009** | 0.004 | **0.009** | 0.003 | 0.006 |

It should be noted that the combination of the technical features of the present disclosure is not limited to the combinations described in the claims or the embodiments and all the technical features described in the present disclosure can be freely combined in any way unless contradicted with each other.

It should also be noted that the embodiments demonstrated above are only specific examples of the present disclosure. It is obvious that the present disclosure is not limited to the above embodiments, and various similar changes or variants can be made. Such changes or variants can be directly obtainable or easily conceivable for those skilled in the art from the content in the present disclosure, and all of which fall within the scope of the present disclosure.

**Claims**

1.  A hot-rolled strip steel for building structure, wherein the hot-rolled strip steel comprises a base layer, a corrosion-resistant layer, and an interfacial transition layer between the base layer and the corrosion-resistant layer;

    the base layer comprises, in addition to Fe and other inevitable impurities, the following chemical elements in percentage by mass: C: 0.03-0.13%, Si: 0.15-0.35%, Mn: 1.00-1.50%, P: 0.0005-0.003%, S: 0.0005-0.01%, Cr: 0.10-0.65%, Ni: 0.2-1.0%, Cu: 0.10-0.25%, Al: 0.020-0.050%, Ti: 0.0090-0.0160%, Nb: 0.060-0.100%, N: 0.0005-0.0050%, V: 0.08-0.25%; and
    the corrosion-resistant layer is made of industrial pure titanium, preferably TA1, TA2, TA3 or TA4.

2.  The hot-rolled strip steel for building structure according to claim 1, wherein the base layer has a chemical composition further satisfying the following relationships:

$$0.32\% \leq Cu+Ni \leq 1.15\%;$$

    and

$$2(C+N) \leq Ti+Nb+Cr+V \leq 0.90\%.$$

3.  The hot-rolled strip steel for building structure according to claim 1 or 2, wherein the base layer comprises the following chemical elements in percentage by mass: C: 0.03-0.13%, Si: 0.15-0.35%, Mn: 1.00-1.50%, P: 0.0005-0.003%, S: 0.0005-0.01%, Cr: 0.10-0.65%, Ni: 0.2-1.0%, Cu: 0.10-0.25%, Al: 0.020-0.050%, Ti: 0.0090-0.0160%, Nb: 0.060-0.100%, N: 0.0005-0.0050%, V: 0.08-0.25%; the balance being Fe and other inevitable impurities.

4.  The hot-rolled strip steel for building structure according to any one of claims 1 to 3, wherein the base layer has a microstructure of ferrite + bainite + martensite, a content of bainite + martensite is 5%-15%, and the ferrite has an average grain size of ≥ grade 8.5.

5.  The hot-rolled strip steel for building structure according to any one of claims 1 to 4, wherein the base layer has a yield strength of ≥460 MPa, a tensile strength of ≥580 MPa, a yield-to-tensile ratio of ≤0.81, and an impact energy at -40 °C of ≥190 J.

6.  The hot-rolled strip steel for building structure according to any one of claims 1 to 5, wherein the corrosion-resistant layer has a microstructure of single, equiaxed α-Ti.

7.  The hot-rolled strip steel for building structure according to any one of claims 1 to 6, wherein the corrosion-resistant layer has a corrosion rate against sea wave splash of ≤0.006 mm/year.

8.  The hot-rolled strip steel for building structure according to any one of claims 1 to 7, wherein the interfacial transition layer has a thickness of ≤8 μm, has an average grain size of 15-40 μm, comprises (Ti, Nb)C precipitate particles of <120 nm, and has an interfacial shear strength of ≥268 MPa.

9.  The hot-rolled strip steel for building structure according to any one of claims 1 to 8, wherein the hot-rolled strip steel has a thickness of 1-16 mm.

10. The hot-rolled strip steel for building structure according to any one of claims 1 to 9, wherein the base layer of the hot-rolled strip steel has a yield strength of ≥460 MPa, a tensile strength of ≥580 MPa, a yield-to-tensile ratio of ≤0.81, and an impact energy at -40 °C of ≥190 J; the corrosion-resistant layer has a corrosion rate against sea wave splash of ≤0.006 mm/year; and an interfacial shear strength is ≥268 MPa.

11. A method for manufacturing the hot-rolled strip steel for building structure according to any one of claims 1 to 10, wherein the method comprises the following steps performed in sequence:

    1) smelting and casting
    smelting and casting into slabs for the base layer and the corrosion-resistant layer, based on compositions of the base layer and the corrosion-resistant layer according to any one of claims 1 to 3, respectively;
    2) assembling slabs
    grinding and polishing surfaces of slabs for the base layer and the corrosion-resistant layer, and performing peripheral weld sealing along contact surfaces of the slabs to form a clad slab comprising the base layer and the corrosion-resistant layer; performing a vacuum treatment to bonding interface after weld sealing;
    3) heating and rolling the clad slab to form a steel strip, wherein

        the clad slab is heated to 900-1000 °C;
        rough rolling is performed at a temperature of ≥ 860 °C; finish rolling is performed at a temperature of 760-850 °C, preferably 780-850 °C; a pass reduction rate is 5-20%, preferably 10-15%; a cumulative reduction rate is ≥ 88%;

    4) cooling
    cooling the steel strip to a temperature of 300-450 °C and then coiling at this temperature to produce the hot-rolled strip steel.

12. The method according to claim 11, wherein in step 2), a thickness of the corrosion-resistant layer is 1 to 10% of a thickness of the clad slab; and/or in step 3), the interfacial transition layer formed between the base layer and the corrosion-resistant layer has a thickness of ≤8 μm.

13. The method according to claim 11 or 12, wherein in step 4), the cooling comprises two stages of cooling, wherein in the first stage, the steel strip is cooled to 700-750 °C at a cooling rate of 2-10 °C/s after leaving the rolling mill stand; in the second stage, the steel strip is cooled to 300-450 °C at a cooling rate of 30-50 °C/s.

FIG. 1

FIG. 2

FIG. 3

FIG. 4

FIG. 5

## INTERNATIONAL SEARCH REPORT

| International application No. |
|---|
| **PCT/CN2024/082492** |

| A. | CLASSIFICATION OF SUBJECT MATTER |
|---|---|

C22C38/50(2006.01)i; C22C38/28(2006.01)i; B32B15/01(2006.01)i; B21B1/22(2006.01)i

According to International Patent Classification (IPC) or to both national classification and IPC

| B. | FIELDS SEARCHED |
|---|---|

Minimum documentation searched (classification system followed by classification symbols)

IPC: C22C38, B32B15, B21B1

Documentation searched other than minimum documentation to the extent that such documents are included in the fields searched

Electronic data base consulted during the international search (name of data base and, where practicable, search terms used)

CNKI, DWPI, CNABS: 热轧, 带钢, 耐蚀, 基层, 过渡层, 钛, 铬, 镍, 铜, 铝, 钛, 铌, 氮, 钒, 铁素体, 贝氏体, 马氏体, 强度, 冲击功, 厚度, 组坯, 压下率, hot rolling, strip steel, corrosion resistance, base layer, transition layer, titanium, chromium, nickel, copper, aluminum, titanium, niobium, nitrogen, vanadium, ferrite, bainite, martensite, strength, impact work, thickness, component, reduction ratio

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113106327 A (BAOSHAN IRON & STEEL CO., LTD.) 13 July 2021 (2021-07-13) claims 1-12, and embodiments | 1-13 |
| A | CN 102773254 A (LI XIANGMIN) 14 November 2012 (2012-11-14) entire document | 1-13 |
| A | CN 104826866 A (PANGANG GROUP RESEARCH INSTITUTE CO., LTD.) 12 August 2015 (2015-08-12) entire document | 1-13 |
| A | KR 20060074050 A (POSCO) 03 July 2006 (2006-07-03) entire document | 1-13 |

☐ Further documents are listed in the continuation of Box C.　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 April 2024** | **19 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/082492**

| Patent document cited in search report | | | Publication date (day/month/year) | Patent family member(s) | | | Publication date (day/month/year) |
|---|---|---|---|---|---|---|---|
| CN | 113106327 | A | 13 July 2021 | None | | | |
| CN | 102773254 | A | 14 November 2012 | None | | | |
| CN | 104826866 | A | 12 August 2015 | None | | | |
| KR | 20060074050 | A | 03 July 2006 | KR | 101105113 | B1 | 16 January 2012 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201210260231
- CN 201710769999X
- CN 201811327623
- CN 201510543767
- CN 201610994234
- CN 201710996925X
- CN 201710983322